# EUROPÄISCHE PATENTANMELDUNG

(11) **EP 4 718 675 A1**
(43) Veröffentlichungstag der Anmeldung: **01.04.2026**
(21) Anmeldenummer: 25201848.6
(22) Anmeldetag: 12.09.2025
(51) Int. Cl.: H02J 7/40, H01M 10/42, H02J 7/80, H02J 7/92

(54) **AKKUMULATOR MIT EINER AKKUDATENSCHNITTSTELLE**

(30) Priorität: 27.09.2024 DE 102024128098
(71) Anmelder: Einhell Germany AG, 94405 Landau / Isar (DE)
(72) Erfinder: Thannhuber, Markus, 94405 Landau (DE); Szekacs, Endre, 94363 Oberschneiding (DE); Fech, Daniel, 86647 Buttenwiesen (DE)
(74) Vertreter: Canzler & Bergmeier Patentanwälte Partnerschaft mbB

(57) **Zusammenfassung**

Die Erfindung betrifft Akkumulator (1), vorzugsweise einen Arbeitsgeräteakkumulator, insbesondere IoT-Akkumulator und/oder IoT-Arbeitsgeräteakkumulator,
mit zumindest einer Energiespeichereinheit (2) und mit zumindest einer Steuereinheit (3) zum Steuern und/oder Überwachen des Akkumulators (1) und/oder eines mit dem Akkumulator (1) gekoppelten Endgeräts (4). Der Akkumulator (1) umfasst zumindest eine Akkudatenschnittstelle (5) zum Datenaustausch mit einer externen Einheit (9, 10, 11) und/oder dem Endgerät (4).

## Beschreibung

Die vorliegende Erfindung betrifft einen Akkumulator, vorzugsweise einen Arbeitsgeräteakkumulator, Gartengeräteakkumulator und/oder Werkzeuggeräteakkumulator, insbesondere IoT-Akkumulator und/oder IoT-Arbeitsgeräteakkumulator, IoT-Gartengeräteackumulator und/oder IoT-Werkzeuggeräteakkumulator, mit zumindest einer Energiespeichereinheit und mit zumindest einer Steuereinheit zum Steuern und/oder Überwachen des Akkumulators und/oder eines mit dem Akkumulator gekoppelten Endgeräts.

Gattungsgemäße Akkumulatoren sind seit langem bekannt. Sie dienen beispielsweise der Energieversorgung von Elektrowerkzeugen. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Akkumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Aufgabe der vorliegenden Erfindung ist es, ein sicheres und/oder flexibel einsetzbares System zum Konfigurieren eines Akkumulators zu schaffen.

Die Aufgabe wird gelöst durch einen Akkumulator mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Akkumulator, vorzugsweise ein Arbeitsgeräteakkumulator, Gartengeräteakkumulator und/oder Werkzeuggeräteakkumulator, insbesondere ein IoT-Ackumulator und/oder ein IoT-Arbeitsgeräteakkumulator, IoT-Gartengeräteakkumulator und/oder IoT-Werkzeuggeräteakkumulator. Der Akkumulator kann somit zum Betreiben bzw. Versorgen eines Arbeitsgeräts, Gartengeräten und/oder Werkzeuggeräten mit elektrischer Energie dienen. Der Akkumulator kann ferner ein mobiler bzw. tragbarer Akkumulator sein. Der Akkumulator kann somit für Handwerksarbeiten und/oder für Gartenarbeiten eingesetzt werden.

Der Akkumulator umfasst zumindest eine Energiespeichereinheit. Mit Hilfe der Energiespeichereinheit kann elektrische Energie bevorratet, gespeichert und bereitgestellt werden.

Ferner umfasst der Akkumulator zumindest eine Steuereinheit zum Steuern und/oder Überwachen des Akkumulators und/oder eines mit dem Akkumulator gekoppelten Endgeräts. Die Steuereinheit ermöglicht eine präzise Regelung der Energieabgabe und/oder erhöht dadurch die Effizienz des Energiemanagements. Zusätzlich oder alternativ kann die Steuereinheit auch das an den Akkumulator angekoppelte Endgerät steuern und/oder überwachen. Dies führt zu einer optimierten Betriebsdauer des Akkumulators und/oder zu einem optimierten Betrieb des Endgeräts. Darüber hinaus ermöglicht die Steuereinheit eine verlängerte Lebensdauer der Energiespeichereinheit, da sie Fehlfunktionen, ein thermisches Durchgehen, eine Überladung und/oder eine Tiefenentladung verhindert. Insgesamt kann die Steuereinheit die Betriebsweise des Akkus und/oder des Endgeräts verbessern und/oder optimieren.

Des Weiteren umfasst der Akkumulator zumindest eine bidirektionale Akkudatenschnittstelle zum Datenaustausch mit einer externen Einheit und/oder dem Endgerät. Mit Hilfe der bidirektionalen Akkudatenschnittstelle können Daten gesendet und empfangen werden. Somit kann eine bidirektionale Kommunikation ausgebildet werden. Diese Akkudatenschnittstelle ermöglicht eine kontinuierliche Überwachung und/oder Analyse von Betriebsdaten, was die Zuverlässigkeit und/oder Wartung des Akkumulators verbessert. Zudem wird durch den Datenaustausch eine nahtlose Integration in bestehende IoT-Infrastrukturen ermöglicht. Weiterhin kann die Datenschnittstelle zur Optimierung von Betriebsparametern in Echtzeit genutzt werden, was zu einer Effizienzsteigerung im gesamten System führt. Des Weiteren können über die Akkudatenschnittstelle Betriebsprogrammdaten auf den Akkumulator übertragen werden. Über die Akkudatenschnittstelle kann somit eine Betriebssoftware des Akkus, mittels der der Akku und/oder das Endgerät gesteuert und/oder überwacht wird, aktualisiert werden. Die Aktualisierung kann hierbei automatisch erfolgen. Zusätzlich oder alternativ kann die Aktualisierung manuell erfolgen, wenn beispielsweise neue oder erweiterte Betriebsprogrammdaten auf den Akku aufgespielt werden sollen. Mit Hilfe der Akkudatenschnittstelle kann auch eine bidirektionale Kommunikation zu einem weiteren Akkumulator ausgebildet werden, so dass zwischen diesen beiden Akkumulatoren Daten ausgetauscht werden können.

Der Akkumulator kann in dieser Beschreibung auch mit Akku abgekürzt werden.

Vorteilhafterweise ist die Steuereinheit als IoT-Steuereinheit ausgebildet. Die IoT-Steuereinheit erlaubt eine dynamische Anpassung an unterschiedliche Betriebsbedingungen und/oder fördert die Interoperabilität mit anderen IoT-Geräten. Dies verbessert die Gesamteffizienz und/oder die Flexibilität des Akkumulators im Einsatz. Zusätzlich oder alternativ ermöglicht die IoT-Steuereinheit das Fernsteuern und/oder Aktualisieren des Akkumulators.

Darüber hinaus ist es vorteilhaft, wenn die Akkudatenschnittstelle kabellos ist. Eine kabellose Schnittstelle reduziert die Notwendigkeit physischer Verbindungen und minimiert darüber hinaus die Abnutzung mechanischer Anschlüsse. Zudem erhöht dies die Flexibilität bei der Platzierung des Akkumulators. Außerdem wird durch den Wegfall von Kabelverbindungen das Risiko von Verbindungsfehlern oder Kabelbrüchen verringert, was die Zuverlässigkeit des Systems steigert.

In einer vorteilhaften Weiterbildung der Erfindung umfasst die Akkudatenschnittstelle eine Fernfunkschnittstelle. Die Integration einer Fernfunkschnittstelle ermöglicht eine großflächige Datenübertragung und unterstützt so den Einsatz des Akkumulators in weitläufigen oder abgelegenen Gebieten. Dies erweitert die Anwendungsmöglichkeiten des Akkumulators erheblich. Zudem ermöglicht die Fernfunkschnittstelle eine ständige Verbindung mit zentralen Systemen, wodurch Echtzeitüberwachungen und/oder -anpassungen möglich sind.

Vorteilhaft ist es, wenn die Akkudatenschnittstelle eine Nahfunkschnittstelle umfasst. Durch die Nahfunkschnittstelle wird eine schnelle und effiziente Datenübertragung im Nahbereich ermöglicht, was die Reaktionszeit des Systems verkürzt und die Benutzerfreundlichkeit erhöht. Zusätzlich oder alternativ trägt die Nahfunkschnittstelle zur Reduzierung des Energieverbrauchs bei, da sie für kurze Distanzen optimiert ist, was die Gesamteffizienz des Akkumulators verbessert.

Des Weiteren ist es vorteilhaft, wenn die Fernfunkschnittstelle als Sigfox, LoRaWAN, zellulare Kommunikation, 5G, 4G, 3G, 2G, LTE-CAT M, Satellitenkommunikation, NB-IoT, WiMAX, LTE-M, DASH7, WiFi, HAPS-Mobilfunkstandard, als proprietäres Kommunikationssystem und/oder eine Satellitenverbindung ausgebildet ist. Derartige Funkstandards gewährleisten eine hohe Kompatibilität mit unterschiedlichen Kommunikationsinfrastrukturen.

Vorteilhafterweise ist die Nahfunkschnittstelle als Bluetooth, Wi-Fi, Zigbee, NFC, Z-Wave, Infrarot, Thread, Ultra-Wideband, Bluetooth Low Energy, ANT+, Wi-Fi Direct und/oder RFID ausgebildet. Durch die Verwendung dieser Nahfunktechnologien wird eine robuste und energieeffiziente Kommunikation mit nahegelegenen Geräten möglich. Dies trägt zur Reduzierung des Energieverbrauchs und zur Verlängerung der Akkulaufzeit bei. Zudem ermöglichen diese Technologien eine einfache und schnelle Integration in bestehende Heim- und Gebäudenetzwerke, was den Benutzerkomfort steigert.

Darüber hinaus bringt es Vorteile mit sich, wenn die Steuereinheit derart ausgebildet und/oder eingerichtet ist, dass diese in Abhängigkeit eines Ortes, einer Verfügbarkeit der Kommunikation, eines Ladezustands der zumindest einen Energiespeichereinheit, eines Datenumfangs und/oder einer Wichtigkeit der Daten zwischen der Nahfunkschnittstelle und der Fernfunkschnittstelle umschalten kann. Durch das automatische Umschalten zwischen Funktechnologien wird die Kommunikationsstabilität unter wechselnden Bedingungen optimiert, was die Zuverlässigkeit des Systems erhöht. Dies führt auch zu einer effizienten Nutzung der verfügbaren Energieressourcen.

In einer vorteilhaften Weiterbildung der Erfindung umfasst der Akkumulator zumindest eine Erfassungseinheit, mittels der zumindest eine Statusinformation des Akkumulators und/oder des an den Akkumulator angekoppelten Endgeräts erfasst werden kann. Die Erfassungseinheit ermöglicht eine genaue Überwachung des Akkumulatorstatus und/oder des Endgerätestatus, was eine proaktive Wartung und Fehlererkennung erleichtert. Dies trägt zur Verlängerung der Lebensdauer des Akkumulators bei. Darüber hinaus können durch die Erfassungseinheit Betriebsdaten zur Optimierung zukünftiger Entwicklungsprozesse gesammelt werden, was die kontinuierliche Verbesserung des Produkts, insbesondere des Akkus und/oder des Endgeräts, fördert. Des Weiteren können damit Fehlfunktionen und/oder eine Abnutzung des Akkus und/oder des Endgeräts ermittelt und/oder vorhergesagt werden.

Es ist vorteilhaft, wenn über die Akkudatenschnittstelle die zumindest eine erfasste Statusinformation an die externe Einheit übermittelt werden kann. Über die Akkudatenschnittstelle werden somit die von der Erfassungseinheit erfassten Daten übermittelt. Durch die Übermittlung von Statusinformationen können Wartungszyklen optimiert und/oder potenzielle Probleme frühzeitig erkannt werden. Dies verbessert die Gesamtbetriebssicherheit und reduziert Ausfallzeiten. Zudem ermöglicht die externe Auswertung der Statusinformationen eine detaillierte Analyse des Energieverbrauchs und die Ableitung von Maßnahmen zur Effizienzsteigerung. Die von der Erfassungseinheit erfassten Daten können hierbei an die externe Einheit übermittelt werden.

Darüber hinaus bringt es Vorteile mit sich, wenn über die Akkudatenschnittstelle Betriebsprogrammdaten und/oder eine Firmware, insbesondere die Basisfirmware und/oder die Individualfirmware, für die zumindest eine Steuereinheit zum Steuern und/oder Überwachen des Akkumulators und/oder des mit dem Akkumulator gekoppelten Endgeräts über die Akkudatenschnittstelle an den Akkumulator übertragen werden können. Dies ermöglicht eine flexible Anpassung und/oder Aktualisierung einer Steuerungssoftware und/oder einer Betriebssoftware, ohne physischen Zugriff auf den Akkumulator, was die Anpassungsfähigkeit des Systems erhöht. Zusätzlich wird dadurch die Wartung des Akkumulators vereinfacht, da Software-Updates und/oder Optimierungen remote durchgeführt werden können.

Vorteilhafterweise ist die Steuereinheit derart ausgebildet und/oder eingerichtet, dass diese über die Akkudatenschnittstelle ein Aktivierungssignal und/oder ein Deaktivierungssignal erhalten kann und anhand des Aktivierungssignals und/oder des Deaktivierungssignals den Akkumulator aktivieren und/oder deaktivieren kann. Dies bietet die Möglichkeit, den Energieverbrauch zu optimieren, indem der Akkumulator nur bei Bedarf aktiviert wird. Gleichzeitig wird die Sicherheit erhöht, da der Akkumulator bei Nichtgebrauch deaktiviert werden kann. Weiterhin ermöglicht diese Funktion den Schutz vor unbefugter Nutzung, da der Akkumulator aus der Ferne deaktiviert werden kann. Des Weiteren kann der Akkumulator beispielsweise erst dann aktiviert werden, wenn er beim Hersteller registriert wurde.

Gemäß einer vorteilhaften Weiterbildung der Erfindung kann der Akkumulator seinen Standort und/oder Standortinformationen ermitteln und/oder den Standort und/oder die Standortinformationen über die Akkudatenschnittstelle an die externe Einheit übermitteln. Die Standortermittlung ermöglicht es, den Akkumulator in Echtzeit zu verfolgen, was die Logistik und/oder Sicherheit, insbesondere bei mobilen Anwendungen, erheblich verbessert. Zusätzlich oder alternativ ist es möglich, bei einem Diebstahl des Akkus diesen zu verfolgen. Die Ermittlung des Standorts kann beispielsweise mittels GPS oder der Nahfunk- und/oder Fernfunkschnittstelle erfolgen. Beispielsweise kann über ein erkanntes WLAN der dazugehörige Ort des WLANs ermittelt werden. Auf gleiche Weise können auch Standortinformationen ermittelt werden. Beispielsweise kann damit eine Kennung einer Mobilfunkzelle ermittelt werden. Über diese Kennung der Mobilfunkzelle kann daraufhin auf den Standort geschlossen werden.

Vorteilhafterweise umfasst der Akkumulator zumindest ein Betätigungselement, mittels dem zumindest die Akkudatenschnittstelle aktiviert und/oder deaktiviert werden kann. Das Betätigungselement bietet eine benutzerfreundliche Möglichkeit zur Steuerung der Kommunikationsfunktionen, was die Flexibilität und Kontrolle über den Akkumulator erhöht. Zudem kann das Betätigungselement als Sicherheitsmerkmal dienen, indem es den Zugriff auf die Kommunikationsfunktionen bei Bedarf einschränkt.

Darüber hinaus ist es vorteilhaft, wenn der Akkumulator zumindest eine Anzeigeeinheit umfasst, mittels der ein Status der Kommunikation über die Akkudatenschnittstelle angezeigt werden kann. Eine Anzeigeeinheit ermöglicht eine sofortige visuelle Rückmeldung über den Kommunikationsstatus, was die Benutzerfreundlichkeit und Betriebssicherheit steigert. Die Anzeigeeinheit kann zudem zur Diagnose und Fehlersuche verwendet werden, indem sie den Betriebszustand und eventuelle Störungen anzeigt, was die Wartung erleichtert.

**In** einer vorteilhaften Weiterbildung der Erfindung umfasst die Akkudatenschnittstelle zumindest eine Antenne. Eine, insbesondere in den Akku integrierte, Antenne gewährleistet eine zuverlässige Signalübertragung, was die Kommunikationsreichweite und - stabilität erhöht. Zudem trägt eine integrierte Antenne zur Reduzierung der Gesamtkosten bei, da sie keine zusätzlichen externen Komponenten erfordert.

Darüber hinaus ist es vorteilhaft, wenn der Akkumulator eine Antennenschnittstelle umfasst, an der die zumindest eine Antenne an den Akkumulator, insbesondere lösbar, angeschlossen werden kann. Hierdurch kann die Antenne an den Akku angebracht werden, wenn sie benötigt wird. Wenn die Antenne nicht mehr benötigt wird, kann sie wieder entfernt werden.

Vorteilhafterweise ist die zumindest eine Antenne zumindest teilweise an einer Außenseite eines Gehäuses des Akkumulators angeordnet. Eine außenliegende Antenne verbessert die Signalstärke und Reichweite, insbesondere in Umgebungen mit hohen Störeinflüssen, was die Kommunikationszuverlässigkeit erhöht. Weiterhin ermöglicht eine außenliegende Antenne eine einfachere Wartung und gegebenenfalls den Austausch, falls notwendig.

Darüber hinaus ist es vorteilhaft, wenn die zumindest eine Antenne zumindest teilweise an einer Innenseite des Gehäuses des Akkumulators angeordnet ist. Eine innenliegende Antenne ist vor Umwelteinflüssen und mechanischer Beschädigung geschützt, was die Lebensdauer der Antenne und/oder des Akkumulators verlängert. Zusätzlich trägt eine innenliegende Antenne zur Ästhetik des Akkumulators bei, indem sie das äußere Design nicht beeinträchtigt.

Vorteilhafterweise ist die zumindest eine Antenne zumindest teilweise in einer Gehäusewandung des Gehäuses des Akkumulators angeordnet. Die Integration der Antenne in die Gehäusewandung ermöglicht eine kompakte Bauweise, ohne die Kommunikationsleistung zu beeinträchtigen, was den Platzbedarf des Akkumulators reduziert.

Darüber hinaus kann die in der Wandung integrierte Antenne besser vor physischen Schäden geschützt werden, was die Langlebigkeit erhöht.

Vorteilhafterweise ist die zumindest eine Antenne an der Außenseite des Gehäuses und/oder an der Innenseite des Gehäuses zumindest teilweise, insbesondere vollständig, von der Gehäusewandung überdeckt. Eine überdeckte Antenne wird vor mechanischen Beschädigungen und Verschmutzungen geschützt, was ihre Lebensdauer und Zuverlässigkeit erhöht. Zudem bietet die Abdeckung durch die Gehäusewandung einen zusätzlichen Schutz vor elektromagnetischen Störungen von außen, was die Signalqualität verbessert.

Es ist vorteilhaft, wenn die zumindest eine Antenne von der Außenseite des Gehäuses und/oder von der Innenseite des Gehäuses beabstandet ist. Ein Abstand der Antenne vom Gehäuse verbessert die Signalqualität durch Reduzierung von Störeinflüssen, was zu einer höheren Kommunikationsstabilität führt. Dieser Abstand kann auch eine bessere Wärmeableitung ermöglichen, was die Leistung und Lebensdauer der Antenne steigert.

Die zumindest eine Antenne kann somit vorteilhafterweise in und/oder an der Gehäusewandung des Gehäuses angeordnet sein.

Des Weiteren ist es von Vorteil, wenn die zumindest eine Antenne mit der Innenseite und/oder mit der Außenseite bündig ist. Hierdurch wird die Antenne platzsparend angeordnet, wobei weiterhin eine gute Signalqualität gegeben ist, da, insbesondere bei der mit der Außenseite bündigen Anordnung, die Gehäusewandung nicht stört. Hierbei ist eine Außenfläche der zumindest einen Antenne mit der Innenseite und/oder mit der Außenseite bündig.

Darüber hinaus ist es vorteilhaft, wenn die Gehäusewandung zumindest im Bereich der zumindest einen Antenne aus einem für elektromagnetische Wellen durchlässigen Material ausgebildet ist. Durch die Verwendung eines durchlässigen Materials werden Signalverluste minimiert, was die Effizienz der Antenne erhöht und die Gesamtleistung des Akkumulators verbessert. Zudem ermöglicht dieses Materialdesign eine erhöhte Flexibilität in der Platzierung und/oder Ausrichtung der Antenne, was die Anpassungsfähigkeit des Akkumulators in verschiedenen Umgebungen erhöht.

Vorteilhafterweise umfasst die Akkudatenschnittstelle zumindest eine erste Antenne für die Fernfunkschnittstelle und zumindest eine zweite Antenne für die Nahfunkschnittstelle. Die Trennung der Antennen für unterschiedliche Funkbereiche optimiert die Signalübertragung in den jeweiligen Frequenzbändern und erhöht so die Kommunikationsleistung des Akkumulators. Darüber hinaus kann dies die Interferenzen zwischen den verschiedenen Funkmodulen verringern, was die Stabilität der Verbindungen verbessert.

In einer vorteilhaften Weiterbildung der Erfindung ist die zumindest eine Akkudatenschnittstelle, insbesondere die zumindest eine Antenne, von einem Koppelbereich zum Ankoppeln des Akkumulators an eine externe Energiequelle und/oder das Endgerät beabstandet. Durch die Trennung von Antenne und Koppelbereich werden elektromagnetische Störungen minimiert, was die Signalqualität und damit die Effizienz der Kommunikation erhöht. Zusätzlich ermöglicht der Abstand eine flexiblere Anordnung der Komponenten im Akkumulator, was die Gestaltungsmöglichkeiten erweitert und den Wartungszugang erleichtert. Beispielsweise ist der Koppelbereich an einer Oberseite des Akkus angeordnet. Die zumindest eine Antenne kann dann beispielsweise an einer Umfangsseite des Akkus angeordnet sein. In diesem Fall kann die zumindest eine Antenne zur Seite hin die Signale abgeben bzw. empfangen.

Es ist vorteilhaft, wenn der Akkumulator eine EMV-Abschirmung umfasst, mittels der Komponenten des Akkumulators, insbesondere die zumindest eine Antenne, abgeschirmt sind. Die EMV-Abschirmung reduziert elektromagnetische Störungen und schützt empfindliche Komponenten, was die Zuverlässigkeit und Lebensdauer des Ackumulators erhöht. Zudem trägt die Abschirmung zur Einhaltung von EMV-Richtlinien bei, was die Zertifizierung und Marktzulassung des Akkumulators erleichtert.

Weitere Vorteile der Erfindung sind in den nachfolgenden Ausführungsbeispielen beschrieben. Es zeigen:
- **Figur 1**: eine perspektivische Ansicht eines Akkumulators,
- **Figur 2**: eine schematische Ansicht des Akkumulators mit Steuereinheit, Akkudatenschnittstelle und an den Akkumulator angekoppelten Endgerät,
- **Figur 3**: eine schematische Ansicht des Akkumulators mit Steuereinheit, Akkudatenschnittstelle, an den Akkumulator angekoppeltes Endgerät und externen Geräten,
- **Figur 4**: eine schematische Ansicht des Akkumulators mit Steuereinheit, mit Fernfunk- und Nahfunkschnittstelle,
- **Figur 5**: eine detaillierte Ansicht des Akkumulators mit an einer Außenseite eines Gehäuses des Akkumulators angeordneten Antenne,
- **Figur 6**: eine detaillierte Ansicht des Akkumulators mit der Antenne, die zumindest teilweise in einer Gehäusewandung angeordnet ist,
- **Figur 7**: eine detaillierte Ansicht des Akkumulators mit der Antenne, die an einer Innenseite des Gehäuses angeordnet ist,
- **Figur 8**: eine detaillierte Ansicht des Akkumulators mit zwei an der Außenseite des Gehäuses des Akkumulators angeordneten Antennen,
- **Figur 9**: eine detaillierte Ansicht des Akkumulators mit Antenne, die in der Gehäusewandung angeordnet ist und
- **Figur 10**: eine detaillierte Ansicht des Akkumulators mit Antenne, die in der Gehäusewandung angeordnet ist und mit der Außenseite bündig ist.

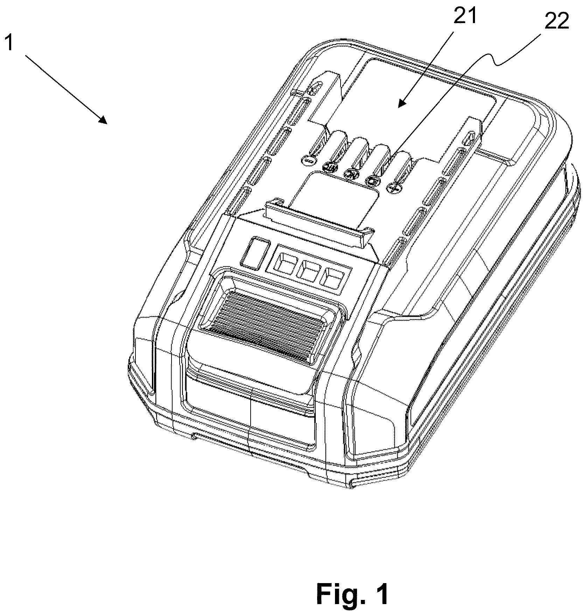

Figur 1 zeigt einen Akkumulator 1, der insbesondere als Arbeitsgeräteakkumulator, vorzugsweise als IoT-Akkumulator und/oder IoT-Arbeitsgeräteakkumulator, ausgeführt ist. Mit Hilfe des Akkumulators 1, der auch mit Akku 1 abgekürzt werden kann, können verschiedene Endgeräte 4 betrieben werden. Diese können beispielsweise Arbeitsgeräte, wie beispielsweise Winkelschleifer, Bohrmaschinen, Rasenmäher, Rasentrimmer usw. sein. Der Akkumulator 1 dient hierbei zur Bereitstellung von elektrischer Energie für mobile Arbeiten oder für Arbeitsgeräte, die ohne einen Hausanschluss bzw. ein Stromnetz betrieben werden.

Der Akkumulator 1 weist einen Koppelbereich 21 zum lösbaren Ankoppeln des Akkumulators 1 an das Endgerät 4 und/oder an ein externes Gerät, beispielsweise ein Ladegerät, auf. Im Koppelbereich 21 sind ferner Kontaktelemente 22 angeordnet, die zum Übertragen der elektrischen Energie und/oder zum Übertragen von Signalen bzw. Daten dienen. Des Weiteren umfasst der Akkumulator 1 einen, insbesondere lösbaren, Fixiermechanismus, der hier allerdings nicht weiter erläutert wird. Mit dem Fixiermechanismus kann der Akku 1 am Endgerät 4 fixiert werden. Dieser kann auch wieder leicht gelöst werden, um den Akku 1 auszutauschen, wenn dieser leer ist.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

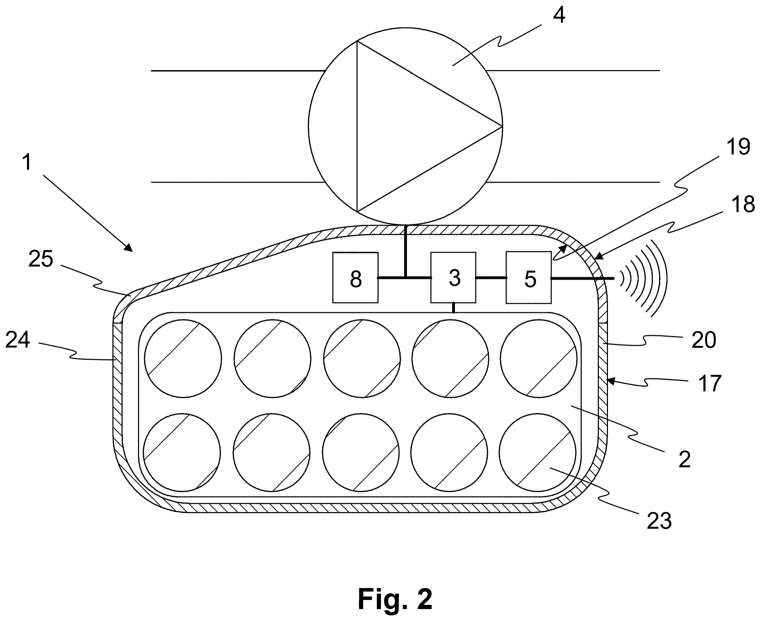

Das in Figur 2 dargestellte Ausführungsbeispiel zeigt den Akkumulator 1, der insbesondere als Arbeitsgeräteakkumulator, vorzugsweise als IoT-Akkumulator und/oder IoT-Arbeitsgeräteakkumulator, ausgeführt ist. Der Akkumulator 1 umfasst zumindest eine Energiespeichereinheit 2, die innerhalb eines Gehäuses 17 angeordnet ist. Das Gehäuse 17 umfasst eine Gehäusewandung 20, die eine Außenseite 18 und eine Innenseite 19 aufweist. Diese Gehäusewandung 20 schützt die im Inneren angeordnete Energiespeichereinheit 2, die weiterhin mehrere Einzelzellen 23 umfassen kann. Die robuste Gehäusewandung 20 sorgt für eine zuverlässige Abschirmung der Energiespeichereinheit 2 gegen äußere Einflüsse und mechanische Belastungen, was die Lebensdauer des Akkumulators 1 verlängert und die Sicherheit erhöht.

Gemäß Figur 2 ist der Akkumulator 1 weiterhin mit einer Steuereinheit 3 ausgestattet. Diese Steuereinheit 3 dient zum Steuern und/oder Überwachen des Akkumulators 1 sowie eines mit dem Akkumulator 1 gekoppelten Endgeräts 4. Die Steuereinheit 3 ermöglicht eine präzise Kontrolle und Überwachung des Betriebszustands des Akkumulators 1, was die Effizienz der Energiespeichernutzung steigert und eine frühzeitige Erkennung von Fehlfunktionen ermöglicht. Das Endgerät 4 ist in diesem Ausführungsbeispiel als Pumpe ausgeführt, die vom Akku 1 mit elektrischer Energie versorgt wird. Die Pumpe kann hierbei beispielsweise eine Gartenpumpe sein.

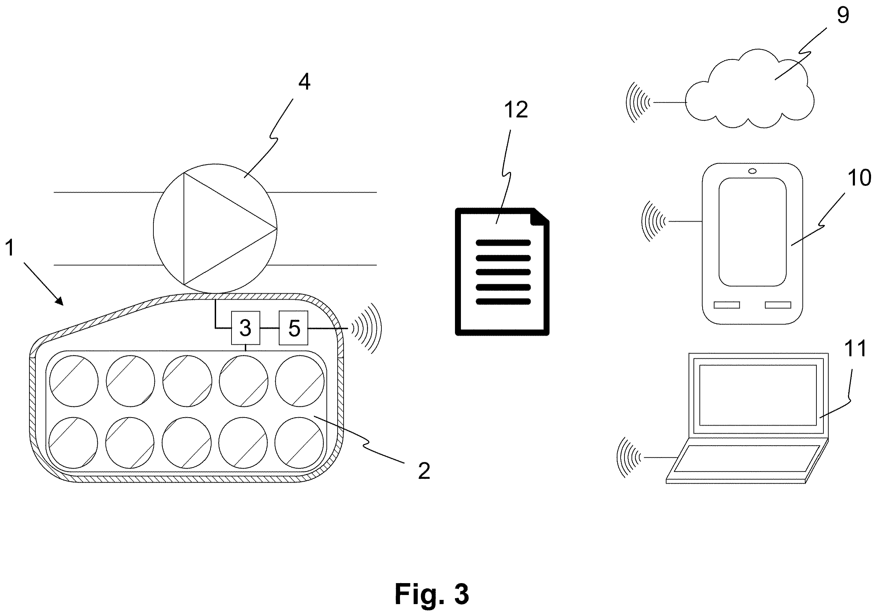

In der Figur 2 ist die Steuereinheit 3 derart angeordnet, dass sie mit der Akkudatenschnittstelle 5 verbunden ist. Diese Akkudatenschnittstelle 5 ermöglicht den Datenaustausch mit einer externen Einheit 9, 10, 11 und/oder dem Endgerät 4. Durch die Akkudatenschnittstelle 5 wird eine flexible und schnelle Kommunikation mit externen Einheiten 9, 10, 11 und/oder externen Geräten und/oder externen Systemen ermöglicht, was eine nahtlose Integration des Akkumulators 1 in verschiedene IoT-Umgebungen und Anwendungen erlaubt. Die externen Einheiten 9, 10, 11 sind in der Figur 3 gezeigt.

Das Ausführungsbeispiel der Figur 2 zeigt außerdem, dass der Akkumulator 1 eine Erfassungseinheit 8 umfasst. Diese Erfassungseinheit 8 ist in der Lage, Statusinformationen des Akkumulators 1 und/oder des gekoppelten Endgeräts 4 zu erfassen. Durch die Erfassungseinheit 8 können wichtige Betriebs- und Statusdaten in Echtzeit überwacht werden, was eine optimierte Wartung und längere Betriebszeiten durch frühzeitige Problemerkennung ermöglicht.

Der Akkumulator 1 kann außerdem Standortinformationen ermitteln und diese über die Akkudatenschnittstelle 5 an eine externe Einheit 9, 10, 11 übermitteln. Diese Standortinformationen können beispielsweise durch GPS, die aktuelle Funkzelle oder ein öffentliches WLAN bestimmt werden. Die Möglichkeit zur Standortbestimmung bietet eine erweiterte Kontrolle über den Einsatzort des Akkumulators 1, was insbesondere für die Nachverfolgung und Logistik von Vorteil ist und zudem die Sicherheit durch Diebstahlschutzmaßnahmen erhöht.

Das in Figur 3 dargestellte Ausführungsbeispiel zeigt eine schematische Ansicht des Akkumulators 1.

Der Akkumulator 1 weist weiterhin die Akkudatenschnittstelle 5 auf, die einen, insbesondere kabellosen, Datenaustausch mit den hier gezeigten externen Einheiten 9, 10, 11 und/oder dem Endgerät 4 ermöglicht. Die, insbesondere kabellose, Akkudatenschnittstelle 5 bietet Flexibilität bei der Kommunikation und erleichtert die Integration des Ackumulators 1 in verschiedene IoT-Umgebungen ohne physische Verbindungen, wodurch Installations- und Wartungsaufwand reduziert werden.

In der Figur 3 ist ebenfalls ersichtlich, dass der Akkumulator 1 in der Lage ist, Betriebsprogrammdaten 12 und/oder eine Firmware über die Akkudatenschnittstelle 5 zu empfangen. Diese Betriebsprogrammdaten 12 und/oder die Firmware können verwendet werden, um ein Betriebssystem und/oder eine Betriebssoftware der Steuereinheit 3 und/oder des damit verbundenen Endgeräts 4 zu aktualisieren. Zusätzlich oder alternativ kann mit den Betriebsprogrammdaten 12 auch eine Betriebssoftware der Steuereinheit 3 aktualisiert werden, die das Endgerät 4 steuert und/oder überwacht. Die Übertragung von Betriebsprogrammdaten 12 ermöglicht eine dynamische Anpassung und/oder Aktualisierung der Software des Akkumulators 1 und/oder des Endgeräts 4, wodurch eine kontinuierliche Optimierung des Betriebs gewährleistet wird.

Die externen Einheiten 9, 10, 11 in Figur 3 repräsentieren verschiedene Geräte, wie beispielsweise eine Cloud 9, ein Smartphone 10 und/oder einen Laptop 11, die alle kabellos und/oder bidirektional mit dem Akkumulator 1 kommunizieren können. Die drahtlose Verbindung zu verschiedenen externen Einheiten 9, 10, 11 erhöht die Vielseitigkeit des Akkumulators 1 und ermöglicht dessen Integration in ein breites Spektrum von Anwendungen, was die Nutzbarkeit in unterschiedlichen Szenarien verbessert.

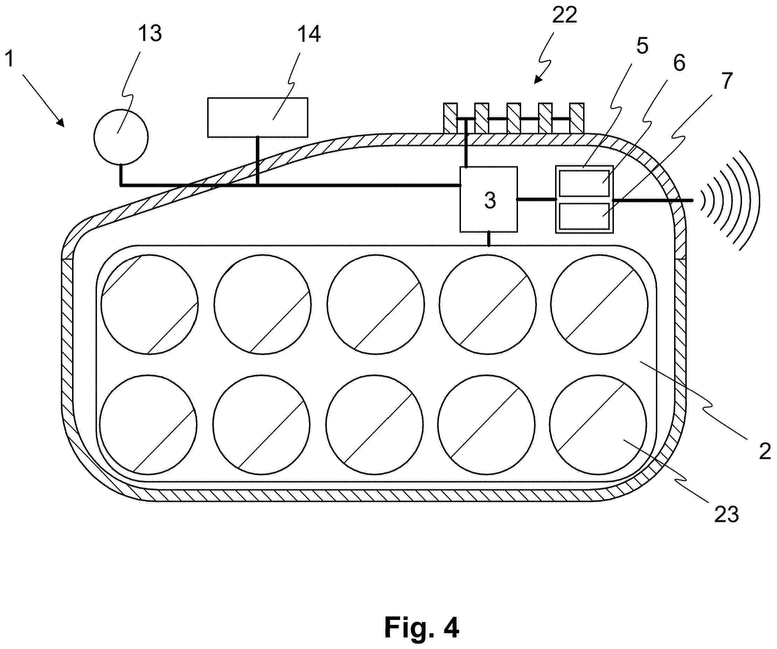

Das in Figur 4 dargestellte Ausführungsbeispiel zeigt eine weitere schematische Ansicht des Akkumulators 1. Der Akkumulator 1 umfasst die zumindest eine Energiespeichereinheit 2.

Gemäß Figur 4 umfasst der Akkumulator 1 die Akkudatenschnittstelle 5, die in diesem Ausführungsbeispiel sowohl eine Fernfunkschnittstelle 6 als auch eine Nahfunkschnittstelle 7 aufweist. Die Fernfunkschnittstellen 6 und die Nahfunkschnittstellen 7 ermöglichen den kabellosen Datenaustausch mit den externen Einheiten 9, 10, 11 und/oder dem Endgerät 4. Durch die Integration von Fern- und Nahfunkschnittstellen 6, 7 bietet die Akkudatenschnittstelle 5 eine hohe Flexibilität bei der Datenübertragung und kann sowohl für lokale als auch für entfernte Verbindungen genutzt werden, was die Vielseitigkeit des Akkumulators 1 erheblich erhöht.

Die Fernfunkschnittstelle 6 kann, wie in Figur 4 dargestellt, als Sigfox, LoRaWAN, 5G, LTE, Satellitenkommunikation oder andere Mobilfunkstandards ausgebildet sein. Diese Arten der Fernfunkschnittstelle 6 ermöglichen eine zuverlässige Kommunikation über große Entfernungen, was insbesondere für IoT-Anwendungen von Vorteil ist, bei denen der Akkumulator 1 an schwer zugänglichen Orten eingesetzt wird.

Zusätzlich oder alternativ bringt es Vorteile mit sich, wenn die Nahfunkschnittstelle 7 als Bluetooth, Wi-Fi oder andere Kurzstreckenkommunikationsstandards ausgebildet ist. Diese Arten an Nahfunkschnittstellen 7 ermöglichen eine schnelle und effiziente Kommunikation über kurze Distanzen, was für lokale Anwendungen oder den direkten Datenaustausch mit Geräten in der Nähe des Akkumulators 1 vorteilhaft ist.

Die Steuereinheit 3 des hier gezeigten Ausführungsbeispiels ist ferner derart ausgebildet und/oder eingerichtet, dass sie in Abhängigkeit von Faktoren wie Ort, Verfügbarkeit der Kommunikation, Ladezustand der Energiespeichereinheit 2, Datenumfang und/oder Wichtigkeit der Daten automatisch zwischen der Nahfunkschnittstelle 7 und der Fernfunkschnittstelle 6 umschalten kann. Diese Funktion optimiert die Kommunikationsleistung und Energieeffizienz, indem immer die beste verfügbare Schnittstelle 6, 7 genutzt wird.

Der Akkumulator 1 umfasst weiterhin ein Betätigungselement 13, das dazu dient, die Akkudatenschnittstelle 5 manuell zu aktivieren und/oder zu deaktivieren. Das Betätigungselement 13 ermöglicht eine einfache Steuerung der Akkudatenschnittstelle 5, was dem Benutzer Flexibilität und Kontrolle über die Datenübertragung bietet.

Schließlich ist in Figur 4 auch eine Anzeigeeinheit 14 gezeigt, die den Status der Kommunikation über die Akkudatenschnittstelle 5 anzeigt. Die Anzeigeeinheit 14 informiert den Benutzer in Echtzeit über den Kommunikationsstatus, was die Benutzerfreundlichkeit erhöht und eine schnelle Reaktion auf eventuelle Kommunikationsprobleme ermöglicht.

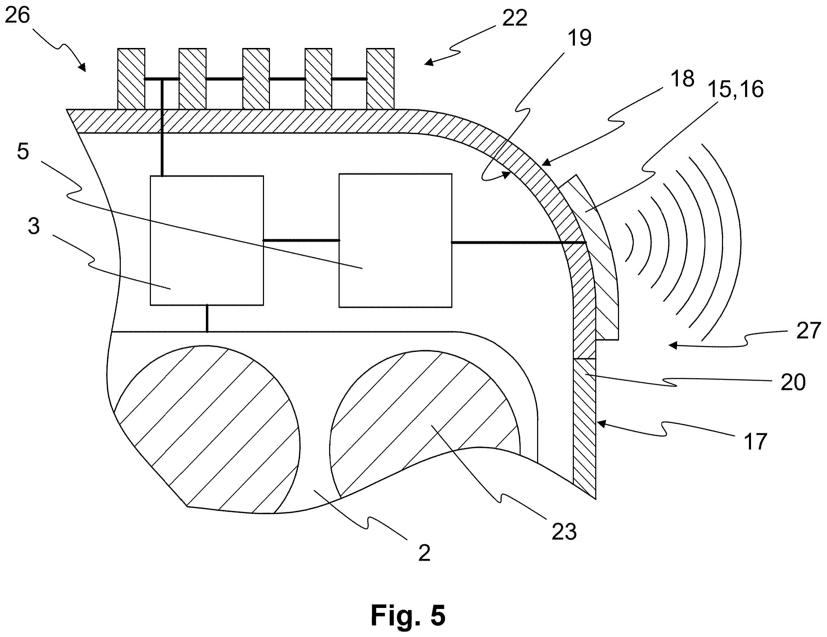

Das in Figur 5 dargestellte Ausführungsbeispiel zeigt eine detaillierte Ansicht des Akkumulators 1, insbesondere die Anordnung zumindest einer Antenne 15, 16 an einer Außenseite 18 des Gehäuses 17 des Akkumulators 1. Der Akkumulator 1 umfasst eine Energiespeichereinheit 2, die durch das Gehäuse 17 geschützt ist. Dieses Gehäuse 17 weist die Gehäusewandung 20 auf, die die Einzelzellen 23 der Energiespeichereinheit 2 umschließt. Die robuste Gehäusewandung 20 sorgt für den Schutz der Energiespeichereinheit 2 gegen äußere Einflüsse und verlängert dadurch die Lebensdauer des Ackumulators 1.

Die in Figur 5 dargestellte Akkudatenschnittstelle 5 umfasst die zumindest eine Antenne 15, 16, die an der Außenseite 18 des Gehäuses 17 des Akkumulators 1 angeordnet ist. Die Anordnung der Antenne 15, 16 an der Außenseite 18 des Gehäuses 17 optimiert die Signalübertragung, da die Antenne 15, 16 weniger durch das Gehäusematerial abgeschirmt wird, was zu einer verbesserten Reichweite und Signalqualität führt.

Des Weiteren sind in dieser Figur 5 Bezugszeichen zu sehen, die eine Oberseite 26 und eine Umfangsseite 27 des Akkumulators 1 definieren. An der Oberseite 26 sind der Koppelbereich 21 und/oder die Kontaktelemente 22 angeordnet. Im Bereich der Oberseite 26 wird somit auch das Endgerät 4 angekoppelt, wie es beispielsweise in der Figur 2 zu sehen ist.

Was hier weiterhin zu sehen ist, ist die zumindest eine Antenne 15, 16 im Bereich der Umfangsseite 27 angeordnet. Dies hat den Vorteil, dass das Endgerät 4 die Funkverbindung mittels der zumindest einen Antenne 15, 16 nicht oder nur wenig stört.

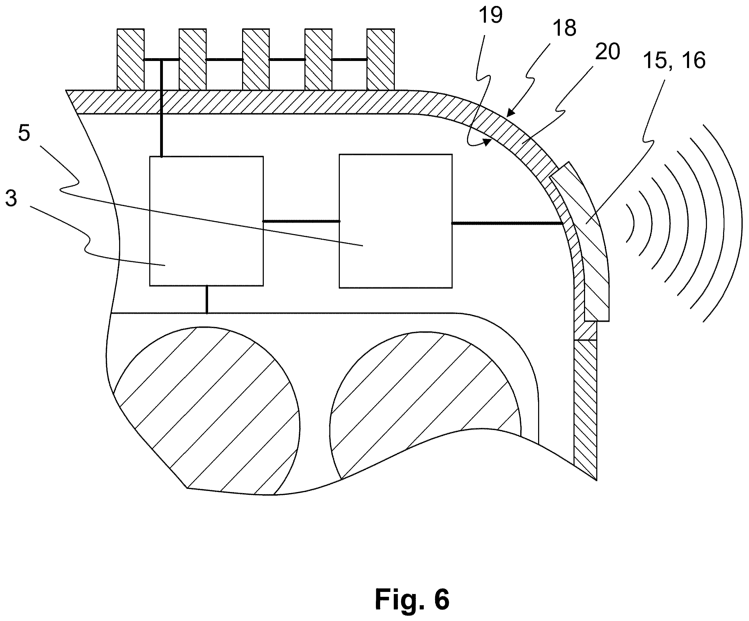

Das in Figur 6 dargestellte Ausführungsbeispiel zeigt eine detaillierte Ansicht des Akkumulators 1, wobei bei dieser Anordnung die zumindest eine Antenne 15, 16 zumindest teilweise in der Gehäusewandung 20 angeordnet ist.

Wie aus dem Ausführungsbeispiel der Figur 6 hervorgeht, ist die Akkudatenschnittstelle 5 mit zumindest einer Antenne 15, 16 ausgestattet. Diese Antenne 15, 16 ist zumindest teilweise an der Außenseite 18 des Gehäuses 17 und/oder, wie bereits beschrieben, zumindest teilweise in der Gehäusewandung 20 des Akkumulators 1 angeordnet. Die teilweise Anordnung der Antenne 15, 16 an der Außenseite 18 des Gehäuses 17 und/oder zumindest teilweise in der Gehäusewandung 20 des Gehäuses 17 verbessert die Funkleistung, indem die Signalstärke erhöht und die Kommunikationseffizienz gesteigert wird, während die Antenne 15, 16 gleichzeitig vor mechanischen Schäden geschützt bleibt.

Zusätzlich zeigt Figur 6, dass die Antenne 15, 16 zumindest teilweise in der Gehäusewandung 20 des Gehäuses 17 angeordnet ist. Die Integration der Antenne 15, 16 in die Gehäusewandung 20 bietet eine erhöhte Robustheit und schützt die Antenne vor äußeren Einflüssen, was die Lebensdauer des Akkumulators 1 verlängert und gleichzeitig die Integrität der Funkkommunikation sicherstellt.

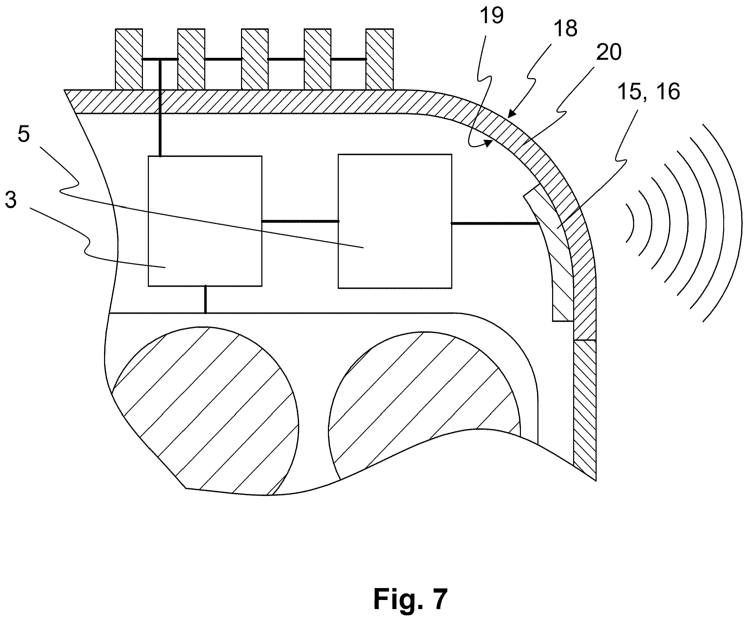

Das in Figur 7 dargestellte Ausführungsbeispiel zeigt eine detaillierte Ansicht des Akkumulators 1, bei dem die zumindest eine Antenne 15, 16 an der Innenseite 19 des Gehäuses 17 angeordnet ist.

Wie aus der Figur 7 hervorgeht, umfasst die Akkudatenschnittstelle 5 zumindest die eine Antenne 15, 16, die teilweise an der Innenseite 19 des Gehäuses 17 des Akkumulators 1 angeordnet ist. Die Anordnung der Antenne 15, 16 an der Innenseite 19 bietet Schutz vor mechanischen Beschädigungen und Umwelteinflüssen, was die Lebensdauer der Antenne erhöht und eine zuverlässige Funkkommunikation sicherstellt.

Durch die Platzierung der Antenne 15, 16 an der Innenseite 19 des Gehäuses 17 wird das Signal dennoch nach außen abgestrahlt, wodurch die Kommunikation mit externen Geräten gewährleistet bleibt. Diese Positionierung kombiniert den Schutz der Antenne 15, 16 mit der Aufrechterhaltung einer effektiven Kommunikation, was besonders in anspruchsvollen Einsatzumgebungen von Vorteil ist.

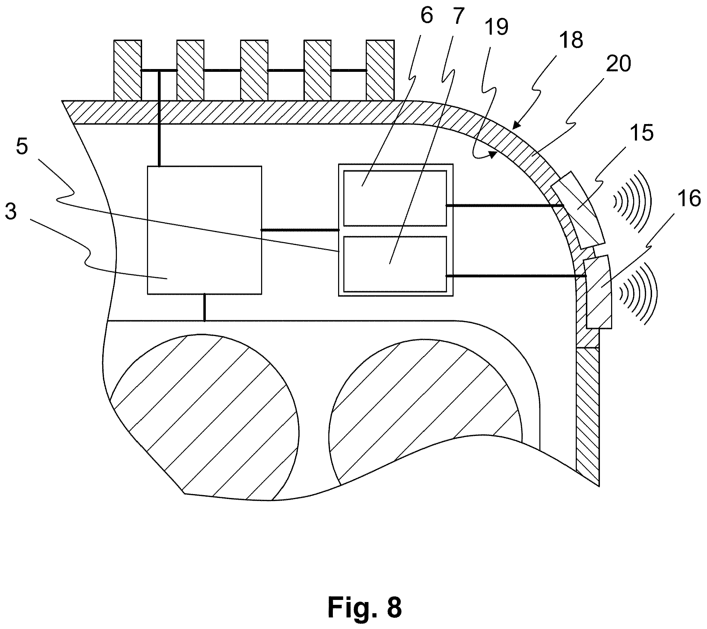

Das in Figur 8 dargestellte Ausführungsbeispiel zeigt eine detaillierte Ansicht des Akkumulators 1, bei dem zwei Antennen 15, 16 an der Außenseite 18 des Gehäuses 17 angeordnet sind.

Die in Figur 8 dargestellte Akkudatenschnittstelle 5 umfasst mindestens eine erste Antenne 15 für die Fernfunkschnittstelle 6 und eine zweite Antenne 16 für die Nahfunkschnittstelle 7. Durch die Bereitstellung separater Antennen 15, 16 für Fern- und Nahfunkschnittstellen 6, 7 wird die Effizienz der Datenübertragung maximiert. Die Fernfunkschnittstelle 6 kann über die erste Antenne 15 große Entfernungen überbrücken, während die zweite Antenne 16 für die Nahfunkschnittstelle 7 eine schnelle und stabile Kommunikation über kurze Distanzen ermöglicht.

Wie aus der Figur 8 hervorgeht, sind beide Antennen 15, 16 an der Außenseite 18 des Gehäuses 17 angeordnet. Diese Positionierung verbessert die Signalstärke und -qualität, da die Antennen 15, 16 weniger durch das Gehäusematerial abgeschirmt werden, was zu einer besseren Funkleistung führt. Dies ist besonders vorteilhaft in Umgebungen mit hohen Kommunikationsanforderungen.

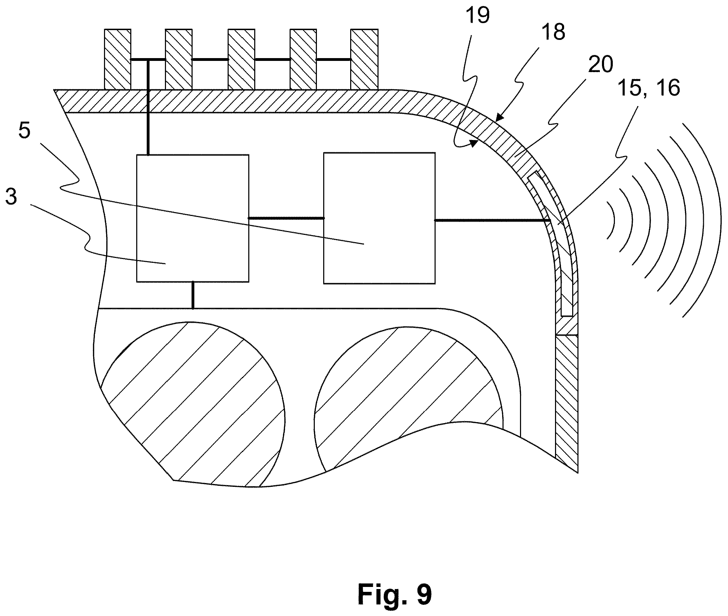

Wie aus der Figur 9 hervorgeht, ist die zumindest eine Antenne 15, 16 zumindest teilweise in die Gehäusewandung 20 integriert. Die zumindest eine Antenne 15, 16 ist hierbei vollständig in der Gehäusewandung 20 angeordnet. Dies bedeutet, dass die zumindest eine Antenne 15, 16 vollständig von einem Material der Gehäusewandung 20 umschlossen ist. Die zumindest eine Antenne 15, 16 ist jeweils beabstandet zur Außenseite 18 und zur Innenseite 19. Die Integration der Antenne 15, 16 in die Gehäusewandung 20 ermöglicht eine platzsparende Bauweise und schützt die Antenne 15, 16 vor äußeren Beschädigungen, ohne die Funktionalität der Funkübertragung zu beeinträchtigen.

Die zumindest eine Antenne 15, 16 ist in der Gehäusewandung 20 sowohl an der Außenseite 18 als auch an der Innenseite 19 des Gehäuses 17 angeordnet und wird von der Gehäusewandung 20 teilweise oder vollständig überdeckt. Diese Anordnung schützt die zumindest eine Antenne 15, 16 nicht nur vor physischen Schäden, sondern minimiert auch Störungen durch äußere Einflüsse, was zu einer zuverlässigeren Funckommunikation führt.

Darüber hinaus ist die Antenne 15, 16 von der Außenseite 18 und/oder der Innenseite 19 des Gehäuses 17 beabstandet. Die Beabstandung der Antenne 15, 16 von der Oberfläche des Gehäuses 17 optimiert die Abstrahlung der elektromagnetischen Wellen und verbessert die Signalstärke und/oder Signalreichweite.

Die Gehäusewandung 20 kann vorteilhafterweise im Bereich der Antenne 15, 16 aus einem für elektromagnetische Wellen durchlässigen Material gefertigt sein. Diese Materialauswahl gewährleistet, dass die Funkwellen ungehindert nach außen gelangen können, was die Effizienz der Datenübertragung maximiert und gleichzeitig die Antenne 15, 16 vor Umweltbelastungen schützt.

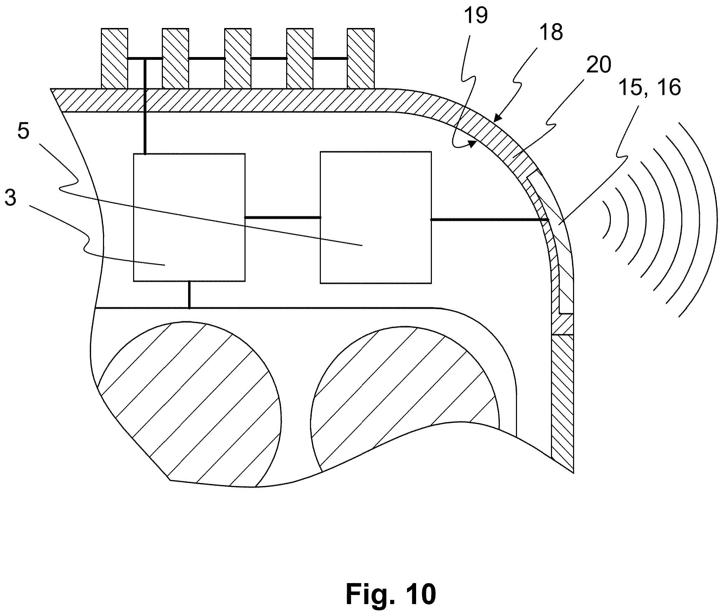

Das in Figur 10 dargestellte Ausführungsbeispiel zeigt eine detaillierte Ansicht des Ackumulators 1, bei dem die Antenne 15, 16 in die Gehäusewandung 20 des Gehäuses 17 integriert und bündig mit der Außenseite 18 des Gehäuses 17 angeordnet ist.

Wie aus Figur 10 hervorgeht, ist die Antenne 15, 16 vollständig in die Gehäusewandung 20 integriert und schließt bündig mit der Außenseite 18 des Gehäuses 17 ab. Durch die bündige Anordnung der Antenne 15, 16 mit der Außenseite 18 wird die Gehäuseoberfläche glatt gehalten, was das Risiko von Beschädigungen oder Abnutzung der Antenne 15, 16 minimiert.

Die Integration der Antenne 15, 16 in die Gehäusewandung 20 sorgt dafür, dass sie gleichzeitig vor mechanischen Einflüssen geschützt ist und dennoch eine effektive Signalübertragung gewährleistet wird. Die Anordnung der Antenne 15, 16 in der Gehäusewandung 20 ermöglicht eine stabile Funkverbindung, ohne dass die Struktur des Gehäuses 17 oder die Funktionalität der Antenne 15, 16 beeinträchtigt wird.

Die vorherigen Figuren zeigen verschiedene Ausführungen des Akkus 1 und/oder der Anordnung der zumindest einen Antenne 15, 16. Wenn mehrere Antennen 15, 16 vorhanden sind, können diese zueinander unterschiedlich angeordnet sein, wie es die vorangegangenen Figuren zeigen. Beispielsweise kann eine Antenne 15, 16 für den Nahfunk an der Innenseite 19 und eine Antenne 15, 16 für den Fernfunk an der Außenseite 18 angeordnet sein. Die mehreren Antennen 15, 16 können zueinander verschieden und in beliebiger Kombination gemäß der vorangegangenen Figuren angeordnet sein.

### Bezugszeichenliste

- 1: Akkumulator
- 2: Energiespeichereinheit
- 3: Steuereinheit
- 4: Endgerät
- 5: Akkudatenschnittstelle
- 6: Fernfunkschnittstelle
- 7: Nahfunkschnittstelle
- 8: Erfassungseinheit
- 9: Cloud
- 10: Smartphone
- 11: Laptop
- 12: Betriebsprogrammdaten
- 13: Betätigungselement
- 14: Anzeigeeinheit
- 15: erste Antenne
- 16: zweite Antenne
- 17: Gehäuse
- 18: Außenseite
- 19: Innenseite
- 20: Gehäusewandung
- 21: Koppelbereich
- 22: Kontaktelemente
- 23: Einzelzellen
- 24: erste Gehäusehälfte
- 25: zweite Gehäusehälfte
- 26: Oberseite
- 27: Umfangsseite

## Patentansprüche

1. Akkumulator (1), vorzugsweise Arbeitsgeräteakkumulator, Gartengeräteakkumulator und/oder Werkzeuggeräteakkumulator, insbesondere IoT-Akkumulator und/oder IoT-Arbeitsgeräteakkumulator, IoT-Gartengeräteakkumulator und/oder IoT-Werkzeuggeräteakkumulator,
mit zumindest einer Energiespeichereinheit (2) und
mit zumindest einer Steuereinheit (3) zum Steuern und/oder Überwachen des Akkumulators (1) und/oder eines mit dem Akkumulator (1) gekoppelten Endgeräts (4),
**dadurch gekennzeichnet,**
**dass** der Akkumulator (1) zumindest eine bidirektionale Akkudatenschnittstelle (5) zum Datenaustausch mit einer externen Einheit (9, 10, 11) und/oder dem Endgerät (4) umfasst.

2. Akkumulator nach dem vorherigen Anspruch, **dadurch gekennzeichnet, dass** die Steuereinheit (3) eine IoT-Steuereinheit ist.

3. Akkumulator nach einem oder mehreren der vorherigen Ansprüche, **dadurch gekennzeichnet, dass** die Akkudatenschnittstelle (5) kabellos ist und/oder
dass die Akkudatenschnittstelle (5) eine Fernfunkschnittstelle (6) umfasst, wobei die Fernfunkschnittstelle (6) vorzugsweise als Sigfox, LoRaWAN, zellulare Kommunikation, 5G, 4G, 3G, 2G, LTE-CAT M, Satellitenkommunikation, WiMAX, LTE-M, DASH7, Wi-Fi, HAPS Mobilfunkstandart, NB-IoT, als proprietäres Kommunikationssystem und/oder als eine Satellitenverbindung ausgebildet ist, und/oder
dass die Akkudatenschnittstelle (5) eine Nahfunkschnittstelle (7) umfasst, wobei die Nahfunkschnittstelle (7) vorzugsweise als Bluetooth, Wi-Fi, Zigbee, NFC, Z-Wave, Infrarot, Thread, Ultra-Wideband, Bluetooth Low Energy, ANT+, Wi-Fi Direct und/oder RFID ausgebildet ist.

4. Akkumulator nach einem oder mehreren der vorherigen Ansprüche, **dadurch gekennzeichnet, dass** die Steuereinheit (3) derart ausgebildet und/oder eingerichtet ist, dass diese in Abhängigkeit eines Ortes, einer Verfügbarkeit der Kommunikation, eines Ladezustands der zumindest einen Energiespeichereinheit (2), eines Datenumfangs und/oder einer Wichtigkeit der Daten zwischen der Nahfunkschnittstelle (7) und der Fernfunkschnittstelle (6) umschalten kann.

5. Akkumulator nach einem oder mehreren der vorherigen Ansprüche, **dadurch gekennzeichnet, dass** der Akkumulator (1) zumindest eine Erfassungseinheit (8) umfasst, mittels der zumindest eine Statusinformation des Akkumulators (1) und/oder des an den Akkumulator (1) angekoppelten Endgeräts (4) erfasst werden kann, und/oder
dass über die Akkudatenschnittstelle (5) die zumindest eine erfasste Statusinformation an die externe Einheit (9, 10, 11) übermittelt werden kann.

6. Akkumulator nach einem oder mehreren der vorherigen Ansprüche, **dadurch gekennzeichnet, dass** über die Akkudatenschnittstelle (5) Betriebsprogrammdaten (12) für die zumindest eine Steuereinheit (3) zum Steuern und/oder Überwachen des Akkumulators (1) und/oder des mit dem Akkumulator (1) gekoppelten Endgeräts (4) über die Akkudatenschnittstelle (5) an den Akkumulator (1) übertragen werden können.

7. Akkumulator nach einem oder mehreren der vorherigen Ansprüche, **dadurch gekennzeichnet, dass** die Steuereinheit (3) derart ausgebildet und/oder eingerichtet ist, dass diese über die Akkudatenschnittstelle (5) ein Aktivierungssignal und/oder ein Deaktivierungssignal erhalten kann und anhand des Aktivierungssignals und/oder eines Deaktivierungssignals den Akkumulator (1) aktiveren und/oder deaktivieren kann.

8. Akkumulator nach einem oder mehreren der vorherigen Ansprüche, **dadurch gekennzeichnet, dass** der Akkumulator (1) seinen Standort und/oder Standortinformationen ermitteln kann und/oder den Standort und/oder die Standortinformationen über die Akkudatenschnittstelle (5) an die externe Einheit (9, 10, 11) übermitteln kann.

9. Akkumulator nach einem oder mehreren der vorherigen Ansprüche, **dadurch gekennzeichnet, dass** der Akkumulator (1) zumindest ein Betätigungselement (13) umfasst, mittels dem zumindest die Akkudatenschnittstelle (5) aktiviert und/oder deaktiviert werden kann, und/oder dass der Akkumulator (1) zumindest eine Anzeigeeinheit (14) umfasst, mittels der ein Status der Kommunikation über die Ackudatenschnittstelle (5) angezeigt werden kann.

10. Akkumulator nach einem oder mehreren der vorherigen Ansprüche, **dadurch gekennzeichnet, dass** die Akkudatenschnittstelle (5) zumindest eine Antenne (15, 16) umfasst und/oder
dass der Akkumulator (1) eine Antennenschnittstelle umfasst, an der die zumindest eine Antenne (15, 16) an den Akkumulator (1), insbesondere lösbar, angeschlossen werden kann.

11. Akkumulator nach einem oder mehreren der vorherigen Ansprüche, **dadurch gekennzeichnet, dass** die zumindest eine Antenne (15, 16) zumindest teilweise an einer Außenseite (18) eines Gehäuses (17) des Akkumulators (1) angeordnet ist und/oder
dass die zumindest eine Antenne (15, 16) zumindest teilweise an einer Innenseite (19) des Gehäuses (17) des Akkumulators (1) angeordnet ist.

12. Akkumulator nach einem oder mehreren der vorherigen Ansprüche, **dadurch gekennzeichnet, dass** die zumindest eine Antenne (15, 16) zumindest teilweise in einer Gehäusewandung (20) des Gehäuses (17) angeordnet ist oder
dass die zumindest eine Antenne (15, 16) von der Außenseite (18) des Gehäuses (17) und/oder von der Innenseite (19) des Gehäuses (17) beabstandet ist.

13. Akkumulator nach einem oder mehreren der vorherigen Ansprüche, **dadurch gekennzeichnet, dass** die zumindest eine Antenne (15, 16) an der Außenseite (18) des Gehäuses (17) und/oder an der Innenseite (19) des Gehäuses (17) zumindest teilweise, insbesondere vollständig, von der Gehäusewandung (20) überdeckt ist und/oder
dass die zumindest eine Antenne (15, 16) mit der Außenseite (18) und/oder mit der Innenseite (19) bündig ist.

14. Akkumulator nach einem oder mehreren der vorherigen Ansprüche, **dadurch gekennzeichnet, dass** die Gehäusewandung (20) zumindest im Bereich der zumindest einen Antenne (15, 16) aus einem für elektromagnetische Wellen durchlässigen Material ausgebildet ist und/oder
dass die zumindest eine Akkudatenschnittstelle (5), insbesondere die zumindest eine Antenne (15, 16), von einem Koppelbereich (21) zum Ankoppeln des Akkumulators (1) an eine externe Energiequelle und/oder des Endgeräts (4) beabstandet ist und/oder
dass der Akkumulator (1) eine EMV-Abschirmung umfasst, mittels der Komponenten des Akkumulators (1), insbesondere von der zumindest einen Antenne (15, 16), abgeschirmt ist.

15. Akkumulator nach einem oder mehreren der vorherigen Ansprüche, **dadurch gekennzeichnet, dass** die Akkudatenschnittstelle (5) zumindest eine erste Antenne (15) für die Fernfunkschnittstelle (6) und zumindest eine zweite Antenne (16) für die Nahfunkschnittstelle (7) umfasst.
